# EUROPEAN PATENT APPLICATION

(11) **EP 2 040 448 A2**
(43) Date of publication of application: **25.03.2009**
(21) Application number: 08164366.0
(22) Date of filing: 15.09.2008
(51) Int. Cl.: H04M 11/02

(54) **Doorphone system**

(30) Priority: 20.09.2007 JP 2007243700
(71) Applicant: Pioneer Corporation, Meguro-ku, Tokyo (JP); Pioneer Communications Corporation, Tokorozawa Saitama (JP); AIPHONE CO., LTD., Nagoya-shi Aichi -ken (JP)
(72) Inventor: Nagao, Tatsuro, Tokorozawa city Aichi (JP); Fujita, Minoru, Nagoya Aichi (JP); Miyoshi, Hideaki, Nagoya Aichi (JP)
(74) Representative: Haley, Stephen

(57) **Abstract**

A doorphone system (101) includes a relay station (3). A doorphone master station (2) and the relay station (3) are wirelessly connected, and the relay station (3) and the cordless extension master station (4) are wirelessly connected. A wireless communication link between the doorphone master station (2) and the cordless extension master station (4) is established via the relay station (3). Namely, all of the wireless communication between the doorphone master station (2) and the cordless extension master station (4) is executed via the relay station (3). The above doorphone system (101) can effectively enlarge the communicatable range between the doorphone master station (2) and the cordless extension master station (4). By using a cordless phone instead of the relay station (3), a system formed by combining the doorphone system and the cordless phone can be easily formed.

## Description

This invention relates to a doorphone system.

Conventionally, there is known a doorphone system capable of responding to a visitor by bidirectionally transmitting and receiving a sound (voice) between a doorphone entrance station arranged at an entrance and a doorphone master station arranged in a house. In Patent Reference-1, there is disclosed a technique for executing mutual talk between a wire interphone system and a wireless interphone system by mounting a relay adapter for cordless interphone on a main phone in a wire interphone system, for example. In Patent Reference-2, there is disclosed a wireless interphone system which is formed by combining a wireless relay station to which the doorphone entrance station is connected with using a signal line, a wireless interphone and a wireless call device.

In addition, there is known a doorphone system which is connected to a cordless phone. In Patent Reference-3, there is disclosed a doorphone system which is formed by combining a cordless phone including a wireless transmitting/receiving unit capable of receiving a call signal from the doorphone to realize the talk with the doorphone, for example. In Patent Reference-4, there is disclosed a technique related to the present invention, too.

However, in the techniques according to Patent References-1 and 2, basically, the doorphone master station and the cordless phone extension master station (cordless/wireless interphone) form a master-sub relationship and directly execute wireless communication. Therefore, a communicatable range tends to be limited within an electric wave arrival range between the doorphone master station and the cordless phone extension masterstation. Mean while, in the techniques according to Patent References-3 and 4, it is difficult to easily form a new communication system by adding the cordless phone to the doorphone system.
Patent Reference-1: Japanese Utility Model Laid-open under No. H05-33094
Patent Reference-2: Japanese Patent Application Laid-open under No. 2002-252711
Patent Reference-3: Japanese Patent Application Laid-open under No. H11-136373
Patent Reference-4: Japanese Patent No. 2855922

The present invention has been achieved in order to solve the above problem. It is an object of the present invention to provide a doorphone system which can enlarge a communicatable range by making a relay station as a master station and establishing a wireless communication link, and which can conveniently form a system formed by combining a cordless phone.

According to one aspect of the present invention, there is provided a doorphone system including: a doorphone entrance station; a doorphone master station which is connected to the doorphone entrance station via a wire; a relay station which is wirelessly connected to the doorphone master station; a cordless extension master station which is wirelessly connected to the relay station, wherein a wireless communication link is established between the doorphone master station and the cordless extension master station via the relay station.

The above doorphone system is preferably used in order to respond to a visitor by bidirectionally transmitting and receiving a sound between the doorphone entrance station and the doorphone master station. Concretely, the doorphone system includes the relay station, and the doorphone master station and the relay station are wirelessly connected. The relay station and the cordless extension master station are wirelessly connected. Then, via the relay station, the wireless communication link between the doorphone master station and the cordless extension master station is established. Namely, all the wireless communication between the doorphone master station and the cordless extension master station is executed via the relay station. According to the above doorphone system, since the wireless communication link is established with using the relay station, the communicatable range between the doorphone master station and the cordless extension master station can be effectively enlarged, compared with such a system that the doorphone master station and the cordless extension master station form an extension relation and the wireless communication is directly executed.

In a preferred manner of the above doorphone system, the doorphone master station may include a first wireless unit which wirelessly communicates with the relay station; the cordless extension master station may include a third wireless unit which wirelessly communicates with the relay station; and the relay station may include a circuit control unit which functions as a master station against each of the first wireless unit and the third wireless unit, and may include a second wireless unit which wirelessly communicates with each of the first wireless unit and the third wireless unit. In this case, in the doorphone system, the relay station functions as a wireless master station, and the doorphone master station and the cordless extension master station function as wireless extension master stations. Thereby, the wireless communication link is formed.

In a manner of the above doorphone system, the relay station may include a charging unit which charges the cordless extension master station. In this manner, the relay station can function as the wireless master station in the wireless communication link, and can function as the charging device of the cordless extension master station. Further, the relay station can be easily carried, and a mounting position thereof can be easily moved in correspondence with a wave situation.

In another manner of the above doorphone system, the relay station may include a telephone line interface circuit which operates as a cordless phone.

In this manner, the cordless phone functions as the wireless master station, and the doorphone master station and the cordless extension master station function as wireless extension master stations. Thereby, the wireless communication link is formed. Namely, via the cordless phone, the wireless communication link between the doorphone master station and the cordless extension master station is established. In the above doorphone system, the wireless master station is regarded as a single device in the wireless communication system. For example, compared with a system including two wireless master stations such as the doorphone master station and the cordless phone master station, the above doorphone system does not have to implement a special protocol. Therefore, the system formed by combining the doorphone system and the cordless phone can be easily formed. In addition, the system including the cordless phone extension master station can make the cordless phone extension master station as the cordless extension master station.

In still another manner of the above doorphone system, the relay station may be formed so that an ON/OFF state of a wireless communication function is switchable.

In accordance with this embodiment, when a new doorphone system is formed by adding the cordless phone to the doorphone system including the relay station, the wireless communication function in the relay station is made in the OFF state, and the master-sub relationship among the doorphone master station, the cordless extension master station and the cordless phone is registered again. Thereby, the new system can be conveniently formed.

The nature, utility, and further features of this invention will be more clearly apparent from the following detailed description with respect to preferred embodiment of the invention when read in conjunction with the accompanying drawings briefly described below.

### IN THE DRAWINGS:

FIG. 1 is a schematic diagram showing a system configuration of a doorphone system according to a first embodiment;
FIG. 2 is a block diagram showing the entire configuration of the doorphone system according to the first embodiment;
FIG. 3 is a flow chart showing a process executed by a doorphone entrance station and a doorphone master station in the first embodiment;
FIG. 4 is a flow chart showing a process executed by a relay station in the first embodiment;
FIG. 5 is a flow chart showing a process executed by a cordless extension master station in the first embodiment;
FIG. 6 is a schematic diagram showing a system configuration of the doorphone system according to a modification of the first embodiment;
FIG. 7 is a schematic diagram showing a system configuration of a doorphone system according to a second embodiment;
FIG. 8 is a block diagram showing the entire configuration of the doorphone system according to the second embodiment;
FIG. 9 is a flow chart showing a process executed by the doorphone entrance station and the doorphone master station in the second embodiment;
FIG. 10 is a flow chart showing a process executed by a cordless phone master station in the second embodiment; and
FIG. 11 is a flow chart showing a process executed by a cordless phone extension master station in the second embodiment.
   - 1: Doorphone entrance station
   - 2: Doorphone master station
   - 3,3a: Relay stations
   - 4,4a,4b,4c: Cordless extension master stations
   - 6: Cordless phone master station
   - 7: Cordless phone extension master station
   - 27,31,41,61,71: Wireless units
   - 101,101a,102: Doorphone systems

The preferred embodiments of the present invention will now be described below with reference to the attached drawings.

### [First Embodiment]

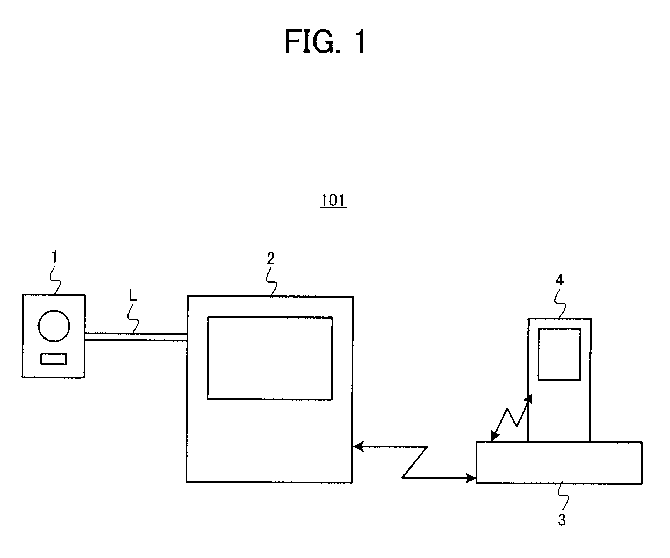

First, a description will be given of a doorphone system according to a first embodiment of the present invention. FIG. 1 is a schematic diagram showing a system configuration of a doorphone system 101 according to the first embodiment.

The doorphone system 101 mainly includes a doorphone entrance station 1, a doorphone master station 2, a relay station 3 and a cordless extension master station 4. Basically, the doorphone system 101 is a system which bidirectionally transmits and receives the sound between the doorphone entrance station 1 and the doorphone master station 2 or the cordless extension master station 4 to be able to respond to a visitor.

The doorphone entrance station 1 is provided out of a house (e.g., at an entrance), and the doorphone master station 2 is provided in the house (e. g. , in a living room). The doorphone entrance station 1 and the doorphone master station 2 are connected via a signal line L in a two-wire system, and the communication is executed by the signal line L. The doorphone master station 2 and the relay station 3 are wirelessly connected, and the relay station 3 and the cordless extension master station 4 are wirelessly connected. Concretely, in the doorphone system 101, the relay station 3 functions as the wireless master station phone, and the doorphone master station 2 and the cordless extension master station 4 function as the wireless extension master station. Thereby, the wireless communication link is formed. Namely, via the relay station 3, the wireless communication link between the doorphone master station 2 and the cordless extension master station 4 is established. Thereby, all of the wireless communication between the doorphone master station 2 and the cordless extension master station 4 is executed via the relay station 3.

The relay station 3 is formed to charge the cordless extensionmaster station 4. Namely, the relay station 3 includes a charging unit (not shown) having a function to charge the cordless extension master station 4. For example, the relay station 3 is formed as a charge mount capable of retaining the cordless extension master station 4 on its upper portion. In addition, the relay station 3 is formed so that an ON/OFF state of the wireless communication function is switchable by a switch.

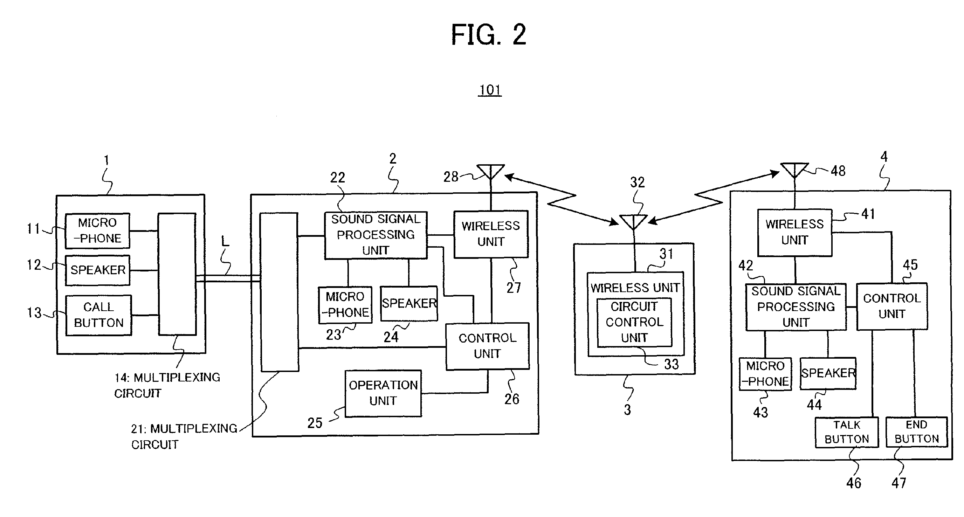

FIG. 2 is a block diagram showing the entire configuration of the doorphone system 101 according to the first embodiment. As described above, the doorphone system 101 includes the doorphone entrance station 1, the doorphone master station 2, the relay station 3 and the cordless extension master station 4.

The doorphone entrance station 1 includes a microphone 11, a speaker 12, a call button 13 and a multiplexing circuit 14. The microphone 11 collects the sound (voice) of the visitor, and the speaker 12 outputs the sound of the user (the person in the house). The call button 13 is pushed when the visitor makes a call. The multiplexing circuit 14 processes the sound signal and the signal corresponding to the operation of the call button 13, and inputs and outputs the signal to and from the doorphone master station 2 via the signal line L. Concretely, the multiplexing circuit 14 transmits, to the doorphone master station 2, a signal (hereinafter referred to as "call signal") corresponding to the push of the call button 13 when the visitor pushes the call button 13. In addition, the signal corresponding to the sound of the visitor, collected by the microphone 11, is inputted to the multiplexing circuit 14, and the multiplexing circuit 14 transmits the signal to the doorphone master station 2. Further, the multiplexing circuit 14 receives the signal corresponding to the sound of the user from the doorphone master station 2 to output the signal to the speaker 12.

The doorphone master station 2 includes a multiplexing circuit 21, a sound signal processing unit 22, a microphone 23, a speaker 24, an operation unit 25, a control unit 26, a wireless unit 27 and an antenna 28. The multiplexing circuit 21 is controlled by the control unit 26, and inputs and outputs the sound signal to and from the sound signal processing unit 22. The sound signal processing unit 22 modulates and demodulates the sound signal. The microphone 23 collects the sound of the user. The speaker 24 outputs the sound of the visitor, and generates a call sound when the call signal is received from the doorphone entrance station 1. The operation unit 25 includes various kinds of buttons (not shown), and it is operated when the user performs the talk via the doorphone master station 2 and when the user finishes the talk via the doorphone master station 2. The signal from the operation unit 25 is inputted to the control unit 26, and the control unit 26 controls the multiplexing circuit 21, the sound signal processing unit 22 and the wireless unit 27.

The wireless unit 27 is formed to be wirelessly communicatable with the relay station 3 via the antenna 28. Concretely, the wireless unit 27 functions as an extension master station against the wireless unit 31 in the relay station 3 (i.e., the wireless unit 31 functions as a master station), and executes the wireless communication. In details, at the time of receiving the call signal from the doorphone entrance station 1, by transmitting the call signal to the relay station 3 via the antenna 28, the wireless unit 27 establishes the wireless communication link with the relay station 3. In this manner, the wireless unit 27 corresponds to a first wireless unit.

The relay station 3 includes the wireless unit 31, an antenna 32 and a circuit control unit 33. The wireless unit 31 can wirelessly communicate with the wireless unit 27 in the doorphone master station 2 and the wireless unit 41 in the cordless extension master station 4 by its circuit control via the antenna 32. Concretely, the circuit control unit 33 is integrated with the wireless unit 31, and the wireless unit 31 functions as a master station against the wireless units 27 and 41 (namely, the wireless units 27 and 41 function as extensionmaster stations). Thus, the wireless communication is executed. Thereby, the wireless communication becomes possible between the doorphone master station 2 and the cordless extension master station 4 via the relay station 3. Specifically, at the time of receiving the call signal from the doorphone master station 2, by transmitting the call signal to the cordless extension master station 4 via the antenna 32, the wireless unit 31 establishes the wireless communication link with the cordless extension master station 4. In this manner, the wireless unit 31 corresponds to a second wireless unit.

The cordless extension master station 4 includes the wireless unit 41, a sound signal processing unit 42, a microphone 43, a speaker 44, a control unit 45, a talk button 46, an end button 47 and an antenna 48. The microphone 43 collects the soundof the user. The speaker 44 outputs the sound of the visitor, and generates the call sound at the time of receiving the call signal from the relay station 3. The talk button 46 is pushed when the user performs the talk by the cordless extension master station 4. The end button 47 is pushed when the user finishes the talk by the cordless extension master station 4. The sound signal processing unit 42 executes modulation/demodulation of the sound signal. The signal is inputted to the control unit 45 from the talk button 46 and the end button 47, and the control unit 45 controls the sound signal processing unit 42 and the wireless unit 41.

The wireless unit 41 can wirelessly communicate with the relay station 3 via the antenna 48. Concretely, the wireless unit 41 functions as an extension master station against the wireless unit 31 in the relay station 3 (i.e. , the wireless unit 31 functions as a master station), and the wireless communication is executed. In details, when the wireless unit 41 receives the call signal from the relay station 3 and the talk button 46 is pushed, the wireless unit 41 establishes the wireless communication link with the relay station 3. Thereby, the wireless communication link is established among the doorphone master station 2, the relay station 3 and the cordless extension master station 4. Namely, the sound link is formed among the doorphone entrance station 1, the doorphone master station 2, the relay station 3 and the cordless extension master station 4. Thereby, it becomes possible that the visitor and the user have a conversation between the doorphone entrance station 1 and the cordless extension master station 4. As described above, the wireless unit 41 corresponds to a third wireless unit.

Now, the doorphone system 101 according to the first embodiment will be compared with a system (hereinafter referred to as "doorphone system according to a first comparative example") having a master-sub relationship between the doorphone master station and the cordless extension master station, which directly executes the wireless communication. In the doorphone system according to the first comparative example, the communicatable range is limited within the range of electric wave arrival between the doorphone master station and the cordless extension master station. Meanwhile, in the doorphone system 101 according to the first embodiment, the wireless communication link is established by making the relay station 3 function as a wireless master station. Thus, by providing the relay station 3 at an appropriate position between the doorphone master station 2 and the cordless extension master station 4, it becomes possible that the communicatable range according to the first embodiment is enlarged more than that of the first comparative example. It becomes possible that a new system is formed by adding the device such as the relay station 3 to the doorphone system according to the first comparative example. However, in that case, it is necessary that both of the doorphone master station and the cordless extension master station implement a special communication protocol corresponding to a device for relaying communication, and it is also necessary to switch whether the doorphone master station functions as a wireless master station having a circuit exchanging function or as a wireless extension master station having no circuit exchanging function, dependently on existence or no-existence of the relay station. Therefore, the new system is less convenient than the doorphone system 101 including the system originally having the relay station 3, and the new systembecomes complicated, which increases the cost.

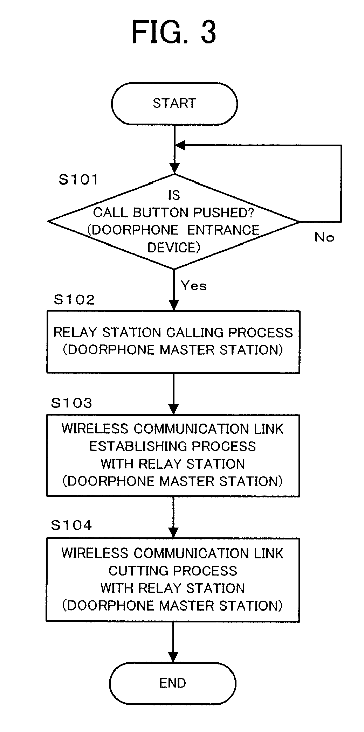

Next, a description will be given of a process executed in the doorphone system 101, with reference to FIG. 3 to FIG. 5.

FIG. 3 is a flow chart showing a process executed by the doorphone entrance station 1 and the doorphone master station 2. In FIG. 3, the main body (the doorphone entrance station 1 or the doorphone master station 2) which executes the process in each step is shown in each parenthesis. Additionally, the process is repeatedly executed.

First, in step S101, the doorphone entrance station 1 determines whether or not the visitor pushes the call button 13. When the call button 13 is pushed (step S101; Yes), the process goes to step S102. Meanwhile, when the call button 13 is not pushed (step S101; No), the process returns to step S101.

In step S102, the doorphone master station 2 executes the process for calling the relay station 3. Concretely, since the call button 13 is pushed (step S101; Yes), the doorphone master station 2 receives the call signal from the doorphone entrance station 1 to transmit the call signal to the relay station 3. Then, the process goes to step S103. In step S103, the doorphone master station 2 establishes the wireless communication link with the relay station 3. Concretely, by the control of the circuit control unit 33 in the relay station 3, the doorphone master station 2 and the relay station 3 communicate with each other. Thereby, the wireless communication link is established. Then, the process goes to step S104.

In step S104, the doorphone master station 2 cuts the wire less communication link with the relay station 3. Concretely, when the user pushes the end button 47 (for terminating communication) of the cordless extension master station 4 and the wireless communication link between the relay station 3 and the cordless extension master station 4 is cut, the doorphone master station 2 cuts the wireless communication link with the relay station 3. In this case, by the control of the circuit control unit 33 in the relay station 3, the doorphone master station 2 and the relay station 3 communicate with each other. Thereby, the wireless communication link is cut. Afterward, the doorphone master station 2 moves to a waiting state. When the above process ends, the process goes out of the flow.

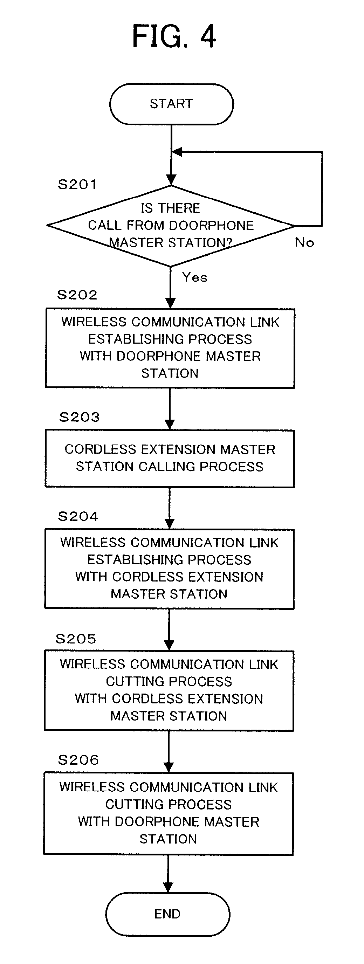

FIG. 4 is a flow chart showing a process executed by the relay station 3. The process is repeatedly executed.

First, in step S201, the relay station 3 determines whether or not it receives the call from the doorphone master station 2. Namely, the relay station 3 determines whether or not it receives the call signal from the doorphone master station 2. In the above process in step S102 (see FIG. 3), the doorphone master station 2 transmits the call signal to the relay station 3. When the relay station 3 receives the call from the doorphone master station 2 (step S201; Yes), the process goes to step S202. Meanwhile, when the relay station 3 does not receive the call (step S201; No), the process returns to step S201.

In step S202, since the relay station 3 receives the call from the doorphone master station 2, the relay station 3 establishes the wireless communication link with the doorphone master station 2. Concretely, by the control of the circuit control unit 33 in the relay station 3, the doorphone master station 2 and the relay station 3 communicate with each other. Thereby, the wireless communication link is established. Then, the process goes to step S203. In step S203, the relay station 3 executes the process for calling the cordless extension master station 4. Concretely, the relay station 3 transmits the call signal to the cordless extension master station 4. Then, the process goes to step S204.

In step S204, the relay station 3 establishes the wireless communication link with the cordless extension master station 4. Concretely, by the control of the circuit control unit 33 in the relay station 3, the relay station 3 and the cordless extensionmaster station 4 communicate with each other. Thereby, the wireless communication link is established. Then, the process goes to step S205.

In step S205, the relay station 3 cuts the wireless communication link with the cordless extension master station 4. Concretely, when the user pushes the end button 47 of the cordless extension master station 4, the relay station 3 releases the wireless communication link with the cordless extension master station 4. In this case, by the control of the circuit control unit 33 in the relay station 3, the relay station 3 and the cordless extension master station 4 communicate with each other. Thereby, the wireless communication link is cut. Then, the process goes to step S206. In step S206, the relay station 3 cuts the wireless communication link with the doorphone master station 2. In this case, by the control of the circuit control unit 33 in the relay station 3, the relay station 3 and the doorphone master station 2 communicate with each other. Thereby, the wireless communication link is cut, which means that the wireless communication link is cut among the doorphone master station 2, the relay station 3 and the cordless extension master station 4. Afterward, the relay station 3 moves to the waiting state. When the above process ends, the process goes out of the flow.

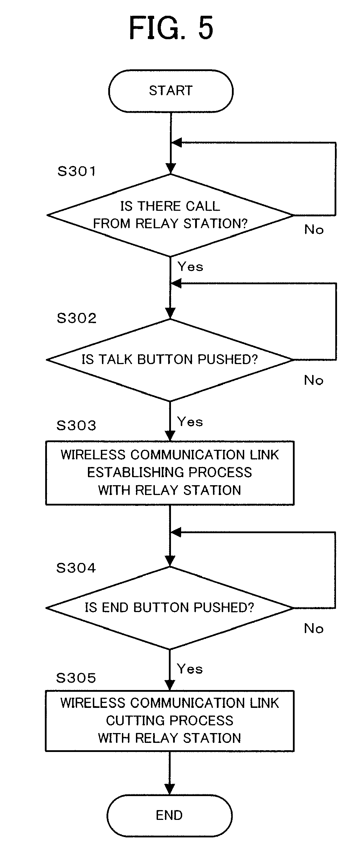

FIG. 5 is a flow chart showing a process executed by the cordless extension master station 4. The process is repeatedly executed.

First, in step S301, the cord less extension master station 4 determines whether or not it receives the call from the relay station 3. Namely, the cordless extension master station 4 determines whether or not it receives the call signal from the relay station 3. In the above process in step S203 (see FIG. 4), the relay station 3 transmits the call signal to the cordless extension master station 4. When the cordless extension master station 4 receives the call from the relay station 3 (step S301; Yes), the process goes to step S302. Meanwhile, when the cordless extension master station 4 does not receives the call from the relay station 3 (step S301; No), the process returns to step S301.

In step S302, the cordless extension master station 4 determines whether or not the user pushes the talk button 46 in the cordless extension master station 4. When the talk button 46 is pushed (step S302; Yes), the process goes to step S303. Meanwhile, when the talk button 46 is not pushed (step S302; No), the process returns to step S302.

In step S303, since the talk button 46 is pushed, the cordless extension master station 4 establishes the wireless communication link with the relay station 3. Concretely, by the control of the circuit control unit 33 in the relay station 3, the cordless extension master station 4 and the relay station 3 communicate with each other. Thereby, the wireless communication link is established. In this case, a talk start request signal is transmitted from the cordless extension master station 4 to the doorphone master station 2 via the relay station 3. Thereby, the wireless communication link is established among the doorphone master station 2, the relay station 3 and the cordless extension master station 4. Namely, the sound link is formed among the doorphone entrance station 1, the doorphone master station 2, the relay station 3 and the cordless extension master station 4. When the above process ends, the process goes to step S304.

In step S304, the cordless extension master station 4 determines whether or not the user pushes the end button 47. When the end button 47 is pushed (step S304; Yes), the process goes to step S305. Meanwhile, when the end button 47 is not pushed (step S304; No), the process returns to step S304.

In step S305, since the end button 47 is pushed, the cordless extension master station 4 cuts the wireless communication link with the relay station 3. In this case, by the control of the circuit control unit 33 in the relay station 3, the cordless extension master station 4 and the relay station 3 communicate with each other. Thereby, the wireless communication link is cut. Afterward, the cordless extension master station 4 moves to the waiting state. When the above process ends, the process goes out of the flow.

As described above, each of the components of the doorphone system 101 executes the process, which can appropriately form the wireless communication link between the doorphone master station 2 and the cordless extension master station 4 via the relay station 3. Thereby, it becomes possible to effectively enlarge the communicatable range between the doorphone master station 2 and the cordless extension master station 4.

In the above embodiment, the relay station 3 capable of charging the cordless extension master station 4 is shown, but the present invention is not limited to this. Namely, it is unnecessary that the relay station 3 is formed as the charging device of the cordless extension master station 4. Also, it is unnecessary that the relay station 3 is formed so that the ON/OFF state of the wireless communication function is switchable. Moreover, in the above embodiment, the doorphone system 101 including the single cordless extensionmaster station 4 is shown, but the present invention is not limited to this. In another embodiment, the doorphone system can be formed with using two or more cordless extension master stations.

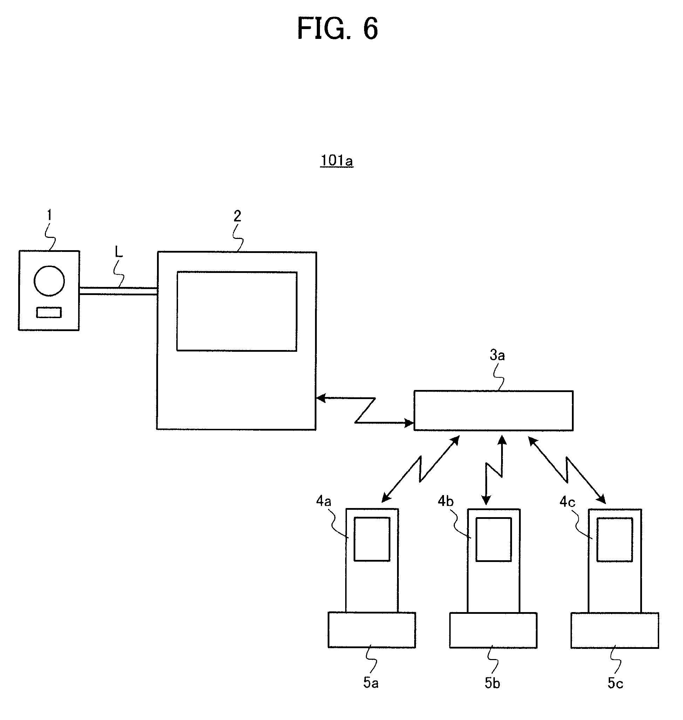

FIG. 6 is a schematic view showing a system configuration of a doorphone system 101a according to a modification of the first embodiment. The doorphone system 101a mainly includes the doorphone entrance station 1, the doorphone master station 2, a relay station 3a and three cordless extension master stations 4a, 4b and 4c. The same reference numerals are given to the same components as those of the above doorphone system 101 (see FIG. 1), and explanation thereof are omitted.

In the door phone system 101a according to the modification, the doorphone master station 2 and the relay station 3a are wirelessly connected, and the relay station 3a and the cordless extension master stations 4a to 4c are wirelessly connected. Concretely, in the doorphone system 101a, the relay station 3a functions as a wireless master station, and the doorphone master station 2 and the cordless extension master stations 4a to 4c function as wireless extension master stations. Thereby, the wireless communication link is formed. Namely, the wireless communication link is established between the doorphone master station 2 and the cordless extension master stations 4a to 4c via the relay station 3. Thereby, all the wireless communication between the doorphone master station 2 and the cordless extension master stations 4a to 4c is executed via the relay station 3a.

Additionally, in the doorphone system 101a, the relay station 3a is not formed as a device which can charge the cordless extension master stations 4a to 4c, i.e., the relay station 3a does not have a function to charge the cordless extension master stations 4a to 4c. Instead, the cordless extension master stations 4a to 4c are formed to be charged by charge mounts 5a to 5c. In the above doorphone system 101a, the wireless communication link is established by making the relay station 3a as a wireless master station. Therefore, by providing the relay station 3a at an appropriate position, it becomes possible to effectively enlarge the communicatable range between the doorphone master station 2 and the cordless extension master stations 4a to 4c.

### [Second Embodiment]

Next, a description will be given of a doorphone system according to a second embodiment of the present invention. The doorphone system according to the second embodiment is formed with using the cordless phone master station of the cordless phone instead of the relay station 3a and with using the cordless phone extension master station of the cordless phone instead of the cordless extension master stations 4a to 4c. In this point, the doorphone system according to the second embodiment is different from the above doorphone system 101 according to the first embodiment. That is, the doorphone system according to the second embodiment is formed by the cordless phone master station having the same function (i.e., the function as a wireless master station) as that of the above relay station 3a.

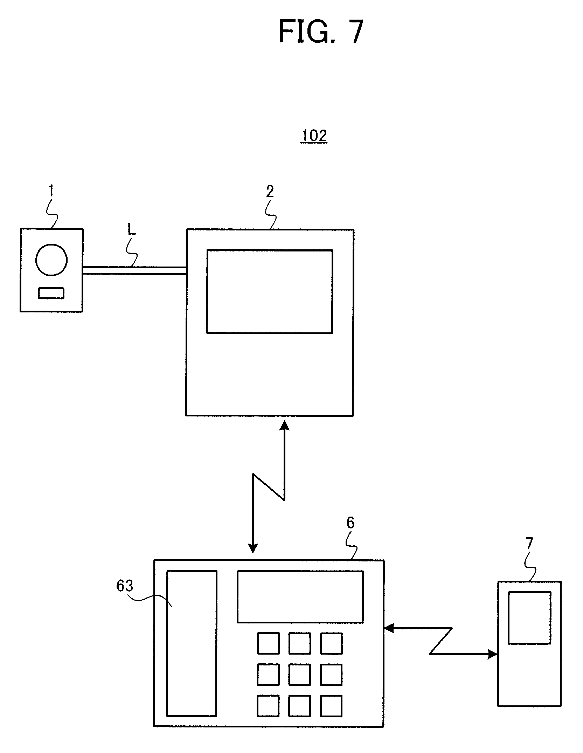

FIG. 7 is a schematic diagram showing a system configuration of a doorphone system 102 according to the second embodiment. The doorphone system 102 mainly includes the doorphone entrance station 1, the doorphone master station 2, the cordless phone master station 6 and the cordless phone extension master station 7. The doorphone system 102 has two functions: a doorphone talking function for having a conversation with the visitor; and a phone talking function for phone talking via a telephone line. The same reference numerals are given to the same components as those of the above doorphone system 101 (see FIG. 1), and explanations thereof are omitted.

The cordless phone master station 6 includes a microphone with which the user actually has a conversation and a handset unit 63 including a receiver, and it is formed to enable the phone talk via the telephone line. In addition, the cordless phone master station 6 and the doorphone master station 2 are wirelessly connected, and the cordless phone master station 6 and the cordless phone extension master station 7 are wirelessly connected. Concretely, in the doorphone system 102, the cordless phone master station 6 functions as a wireless master station, and the doorphone master station 2 and the cordless phone extension master station 7 function as wireless extension master stations. Thereby, the wireless communication link is formed. Namely, via the cordless phone master station 6, the wireless communication link between the doorphone master station 2 and the cordless phone extension master station 7 is established. Thereby, all of the wireless communication between the doorphone master station 2 and the cordless phone extension master station 7 is executed via the cordless phone master station 6.

Asmentionedabove, in the second embodiment, the cord less phone master station 6 has the same function as that of the above relay station 3. That is, in the second embodiment, the cordless phone master station 6 functions as a relay station for relaying the wireless communication between the doorphone master station 2 and the cordless phone extension master station 7 in the doorphone system 102. The doorphone system 102 is formed in such a state that the communication protocol of the wireless unit 27 integrated with the doorphone master station 2 and the cordless phone extension master station 7 is implemented in conformity with (compatible with) a communication protocol of a normal cordless phone.

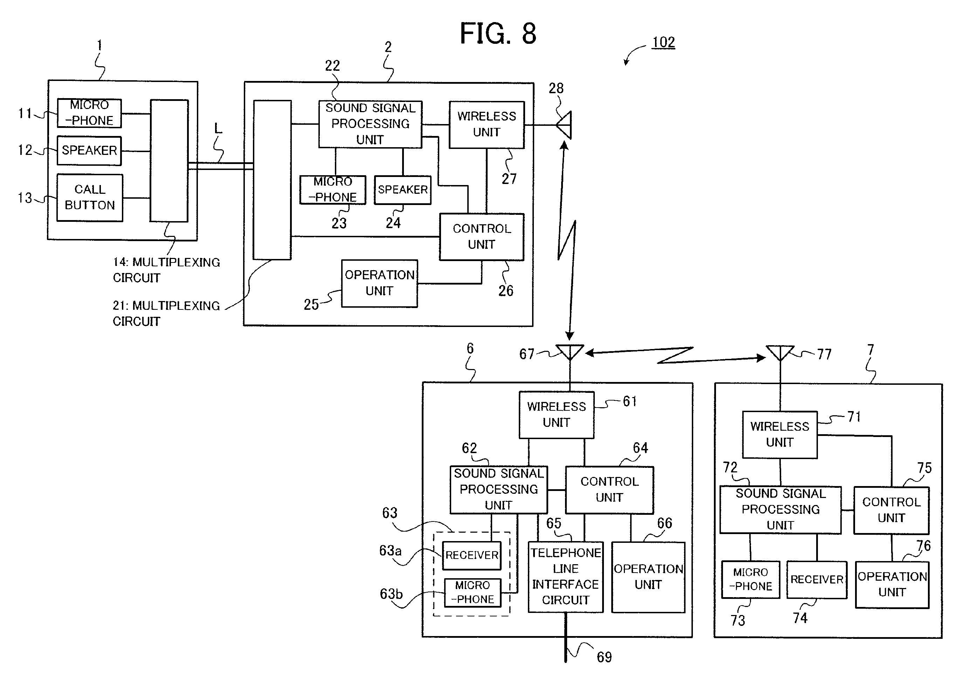

FIG. 8 is a block diagram showing the entire configuration of the doorphone system 102 according to the second embodiment. As described above, the doorphone system 102 includes the doorphone entrance station 1, the doorphone master station 2, the cordless phone master station 6 and the cordless phone extension master station 7. The same reference numerals are given to the same components as those of the above-mentioned doorphone system 101 (see FIG. 2), and explanations thereof are omitted.

The cordless phone master station 6 includes a wireless unit 61, a sound signal processing unit 62, a receiver 63a, a microphone 63b, a control unit 64, a telephone line interface circuit 65, an operation unit 66 and an antenna 67.

The microphone 63b collects the sound of the user, and the receiver 63a outputs the sound. In this case, the microphone 63b and the receiver 63a form the handset unit 63. The sound signal processing unit 62 executes the modulation/demodulation of the sound signal. A telephone line 69 is connected to the telephone line interface circuit 65. Via the telephone line 69, a sound of a conversation partner is received, and the sound of the user is transmitted. The operation unit 66 includes a ten-key (not shown), the talk button and the end button. In this case, the talk button in the operation unit 66 is pushed when the user performs the talk with using the cordless phone master station 6, and the end button in the operation unit 66 is pushed when the user ends the talk with using the cordless phone master station 6. The signal is inputted to the control unit 64 from the operation unit 66, and the control unit 64 controls the wireless unit 61, the sound signal processing unit 62 and the telephone line interface circuit 65.

The wireless unit 61 can wirelessly communicate with the wireless unit 27 in the doorphone master station 2 and the wireless unit 71 in the cordless phone extension master station 7 via the antenna 67. Concretely, the wireless unit 61 functions as a master station against the wireless units 27 and 71 (i.e., the wireless units 27 and 71 function as wireless extension master stations) to perform the wireless communication. Thereby, the wireless communication becomes possible between the doorphone master station 2 and the cordless phone extension master station 7 via the cordless phone master station 6. In details, at the time of receiving the call signal from the doorphonemaster station 2, the wireless unit 61 transmits the call signal to the cordless phone extension master station 7 via the antenna 67. Thereby, the wireless communication link with the cordless phone extension master station 7 is established. In this manner, the wireless unit 61 corresponds to the second wireless unit.

The cordless phone extension master station 7 functions as the above cordless extension master station, and includes the wireless unit 71, a sound signal processing unit 72, a microphone 73, a receiver 74, a control unit 75, an operation unit 76 and an antenna 77. The microphone 73 collects the sound of the user, and the receiver 74 outputs the sounds of the visitor and the conversation partner. The operation unit 76 includes the ten-key (not shown), the talk button and the end button. In this case, the talk button in the operation unit 76 is pushed when the user performs the call with using the cordless phone extension master station 7, and the end button in the operation unit 76 is pushed when the user ends the talk with using the cordless phone extension master station 7. The sound signal processing unit 72 executes the modulation/demodulation of the sound signal. The signal is inputted to the control unit 75 from the operation unit 76, and the control unit 75 controls the sound signal processing unit 72 and the wireless unit 71.

The wireless unit 71 can wirelessly communicate with the cordless phone master station 6 via the antenna 77. Concretely, the wireless unit 71 functions as an extension master station against the wireless unit 61 in the cordless phone master station 6 (i.e., the wireless unit 61 functions as a master station), and executes the wireless communication. In details, the wireless unit 71 receives the call signal from the cordless phone master station 6, and establishes the wireless communication link with the cordless phone master station 6 in such a case that the talk button in the operation unit 76 is pushed. Thereby, the wireless communication link is established among the doorphone master station 2, the cordless phone master station 6 and the cordless phone extension master station 7. Namely, the sound link is formed among the doorphone entrance station 1, the doorphone master station 2, the cordless phone master station 6 and the cordless phone extension master station 7. Thereby, it becomes possible that the visitor and the user have a conversation between the doorphone entrance station 1 and the cordless phone extension master station 7. As described above, the wireless unit 71 corresponds to the third wireless unit.

Now, the doorphone system 102 according to the above second embodiment is compared with a system (hereinafter referred to as "doorphone system according to a second comparative example") formed by combining the cordless phone and the doorphone system simultaneously including two wireless master stations, i.e., the doorphone master station and the cordless phone master station/extension master station. In the doorphone system according to the second comparative example, it is necessary to implement the special protocol to all of the doorphone master station, the doorphone entrance station, the cordless phone master station and the cordless phone extension master station in order to realize mutual communication among the two wireless master stations, the doorphone entrance station and the cordless phone extension master station. Therefore, the system becomes complicated, which increases the cost. On the other hand, in the doorphone system 102 according to the second embodiment, the doorphone master station 2 functions as a wireless extension master station, and the cordless phone master station 6 functions as a wireless master station. Thereby, the wireless communication link is established. Therefore, the system can be easily formed by combining the doorphone system and the cordless phone.

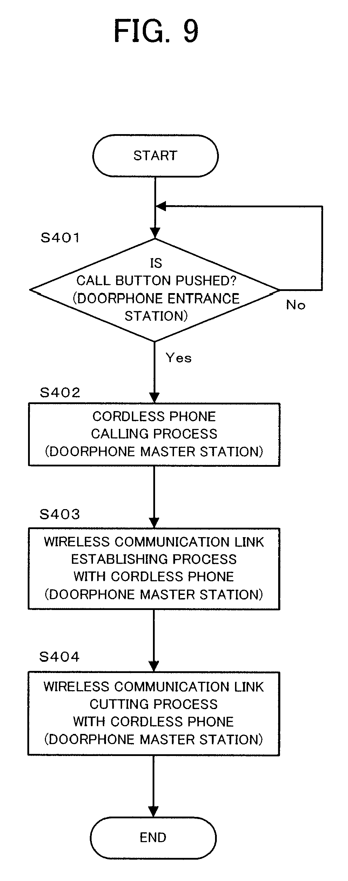

Next, a description will be given of the process executed in the doorphone system 102, with reference to FIG. 9 to FIG. 11.

FIG. 9 is a flow chart showing the process executed by the doorphone entrance station 1 and the doorphone master station 2. In FIG. 9, the main body (the doorphone entrance station 1 or the doorphone master station 2) which executes the process in each step is shown in a parenthesis. Additionally, the process is repeatedly executed.

First, in step S401, the doorphone entrance station 1 determines whether or not the visitor pushes the call button 13. When the call button 13 is pushed (step S401; Yes), the process goes to step S402. When the call button 13 is not pushed (step S401; No), the process returns to step S401.

In step S402, since the call button 13 of the doorphone entrance station 1 is pushed, the doorphone master station 2 executes the process for calling the cordless phone master station 6. Concretely, the doorphone master station 2 transmits the call signal to the cordless phone master station 6. Then, the process goes to step S403. In step S403, the doorphone master station 2 establishes the wireless communication link with the cordless phone master station 6. Concretely, by the control of the control unit 64, the doorphone master station 2 and the cordless phone master station 6 communicate with each other. Thereby, the wireless communication link is established. Then, the process goes to step S404.

In step S404, the doorphone master station 2 cuts the wireless communication link with the cordless phone master station 6. Concretely, when the user pushes the end button in the cordless phone extension master station 7 and the wireless communication link between the cordless phone master station 6 and the cordless phone extension master station 7 is cut, the doorphone master station 2 releases the wireless communication link with the cordless phone master station 6. In this case, by the control of the control unit 64, the doorphone master station 2 and the cordless phone master station 6 communicate with each other. Thereby, the wireless communication link is cut. Afterward, the doorphone master station 2 moves to the waiting state. When the above process ends, the process goes out of the flow.

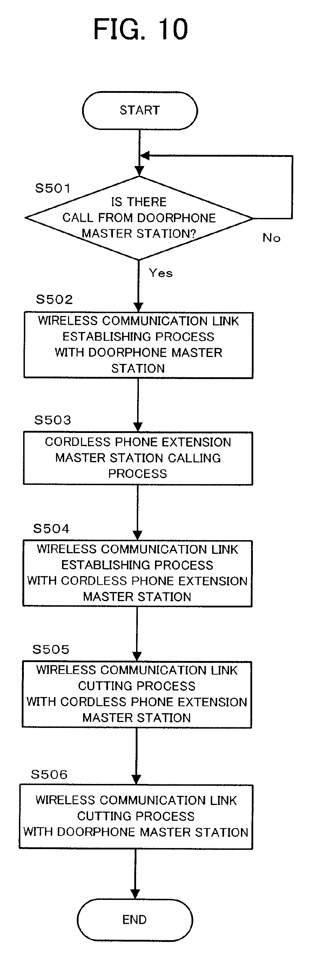

FIG. 10 is a flow chart showing the process executed by the cordless phone master station 6. The process is repeatedly executed.

First, in step S501, the cordless phone master station 6 determines whether or not it receives the call from the doorphone master station 2. Namely, the cordless phone master station 6 determines whether or not it receives the call signal from the doorphone master station 2. The doorphone master station 2 transmits the call signal to the cordless phone master station 6 in the above process in step S402 (see FIG. 9). When the cordless phone master station 6 receives the call from the doorphone master station 2 (step S501; Yes), the process goes to step S502. Meanwhile, when the cordless phone master station 6 does not receive the call (step S501; No), the process returns to step S501.

In step S502, since the cordless phone master station 6 receives the call from the doorphone master station 2, the cordless phone master station 6 establishes the wireless communication link with the doorphone master station 2. Concretely, the doorphone master station 2 and the cordless phone master station 6 communicate with each other. Thereby, the wireless communication link is established. Then, the process goes to step S503. In step S503, the cordless phone master station 6 executes a process for calling the cordless phone extension master station 7. Concretely, the cordless phone master station 6 transmits the call signal to the cordless phone extension master station 7. Then, the process goes to step S504.

In step S504, the cordless phone master station 6 establishes the wireless communication link with the cordless phone extension master station 7. Concretely, by the control of the control unit 64, the cordless phone master station 6 and the cordless phone extension master station 7 communicate with each other. Thereby, the wireless communication link is established. Then, the process goes to step S505.

In step S505, the cordless phone master station 6 cuts the wireless communication link with the cordless phone extension master station 7. Concretely, when the user pushes the end button in the cordless phone extension master station 7, the cordless phone master station 6 releases the wireless communication link with the cordless phone extension master station 7. In this case, by the control of the control unit 64, the cordless phone master station 6 and the cordless phone extension master station 7 communicate with each other. Thereby, the wireless communication link is cut. Then, the process goes to step S506. In step S506, the cordless phone master station 6 cuts the wireless communication link with the doorphone master station 2. In this case, by the control of the control unit 64, the cordless phone master station 6 and the doorphone master station 2 communicate with each other. Thereby, the wireless communication link is cut. Therefore, the wireless communication link among the doorphone master station 2, the cordless phone master station 6 and the cordless phone extension master station 7 is cut. Afterward, the cordless phone master station 6 moves to the waiting state. When the above process ends, the process goes out of the flow.

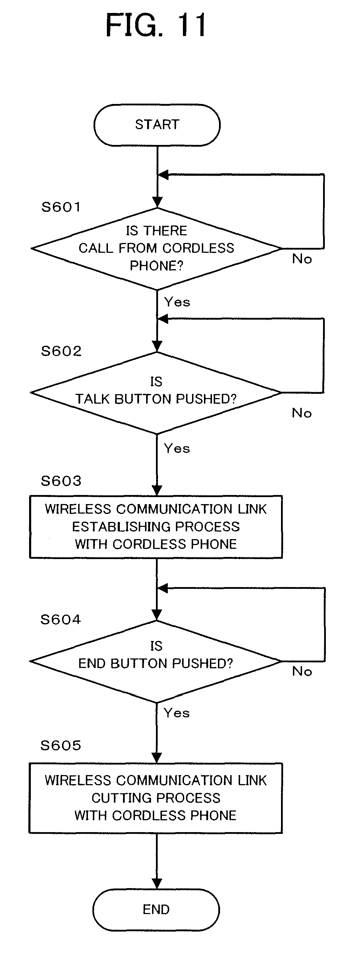

FIG. 11 is a flow chart showing the process executed by the cordless phone extension master station 7. The process is repeatedly executed.

First, in step S601, the cordless phone extension master station 7 determines whether or not it receives the call from the cordless phone master station 6. Namely, the cordless phone extension master station 7 determines whether or not it receives the call signal from the cordless phone master station 6. In the above process in step S503 (see FIG. 10), the cordless phone master station 6 transmits the call signal to the cordless phone extension master station 7. When the cordless phone extension master station 7 receives the call from the cordless phone master station 6 (step S601; Yes), the process goes to step S602. Meanwhile, when the cordless phone extension master station 7 does not receive the call (step S601; No), the process returns to step S601.

In step S602, the cordless phone extension master station 7 determines whether or not the user pushes the talk button in the cordless phone extension master station 7. When the talk button is pushed (step S602; Yes), the process goes to step S603. Meanwhile, when the talk button is not pushed (step S602; No), the process returns to step S602.

In step S603, since the talkbutton is pushed, the cordless phone extension master station 7 establishes the wireless communication link with the cordless phone master station 6. Concretely, by the control of the control unit 64, the cordless phone extension master station 7 and the cordless phone master station 6 communicate with each other. Thereby, the wireless communication link is established. In this case, the talk start request signal is transmitted to the doorphone master station 2 from the cordless phone extension master station 7 via the cordless phone master station 6. Thereby, the wireless communication link is established among the doorphone master station 2, the cordless phone master station 6 and the cordless phone extension master station 7. Namely, the sound link is formed among the doorphone entrance station 1, the doorphone master station 2, the cordless phone master station 6 and the cordless phone extension master station 7. When the above process ends, the process returns to step S604.

In step S604, the cordless phone extension master station 7 determines whether or not the user pushes the end button. When the end button is pushed (step S604; Yes), the process goes to step S605. Meanwhile, when the end button is not pushed (step S604; No), the process goes to step S604.

In step S605, since the end button is pushed, the cordless phone extension master station 7 cuts the wireless communication link with the cordless phone master station 6. In this case, by the control of the control unit 64, the cordless phone extension master station 7 and the cordless phone master station 6 communicate with each other. Thereby, the wireless communication link is cut. Afterward, the cordless phone extension master station 7 moves to the waiting state. When the above process ends, the process goes out of the flow.

As described above, each of the components of the doorphone system 102 executes the process. Thereby, the wireless communication link can be appropriately formed between the doorphonemaster station 2 and the cordless phone extensionmaster station 7 via the cordless phone master station 6.

In the above embodiment, such an example that the doorphone system 102 is formed with using the cordless phone master station 6 instead of the relay station 3 is shown. However, as another example, a new doorphone system can be formed by adding the cordless phone master station 6 to the doorphone system 101 (see FIG. 1) including the relay station 3. In this case, the wireless communication function in the relay station 3 is made in the OFF state (in an invalid state), which makes the relay station 3 function only as the charge mount of the cordless extension master station 4. The master-sub relationship among the doorphone master station 2, the cordless extension master station 4 and the cordless phone master station 6 is reregistered. Thereby, a new system can be formed. Namely, the cordless phone master station 6 functions as a wireless master station, and the doorphone master station 2 and the cordless extension master station 4 function as wireless extension master stations. Thereby, the new wireless communication link is formed. In still another example, by adding the cordless phone master station 6 to the doorphone system 101a (see FIG. 6), a new system can be formed. Further, by adding not only the cordless phone master station 6 but also the cordless phone extension master station 7 to the doorphone system 101 or 101a, a new system can be formed, too.

### [Modification]

In the above embodiments, the doorphone systems 101, 101a and 102 with using only the sound signal are shown. However, the present invention can be applied to the doorphone system capable of communicating not only the sound signal but also a picture signal photographed by a camera. Namely, the present invention is applicable to a television doorphone, too. Furthermore, the present invention is applicable to a room (baby) monitoring system, a security (monitor) camera system and a system including a recorder in the systems.

Additionally, in FIG. 8, the cordless phone master station 6 includes the wireless unit 61, the sound signal processing unit 62, the receiver 63a, the microphone 63b, the control unit 64, the telephone line interface circuit 65, the operation unit 66 and the antenna 67. However, it is not limited that the cordless phone master station 6 is formed in this manner. In another example, the cordless phone master station can be formed only by the wireless unit, the control unit, the telephone line interface circuit and the antenna. In this case, it is preferable that the phone function of the cordless phone extension master station is used. Moreover, when the cordless phone master station is formed in this method, it is also preferable that the cordless phone master station functions as the charge mount of the cordless phone extension master station.

As described above, the doorphone system according to this embodiment includes the doorphone entrance station, the doorphone master station connected to the doorphone entrance station via a wire, the relay station wirelessly connected to the doorphone master station and the cordless extension master station wirelessly connected to the relay station, and the wireless communication link between the doorphone master station and the cordless extension master station is established via the relay station. Thereby, it becomes possible to effectively enlarge the communicatable range between the doorphone master station and the cordless extension master station.

## Claims

1. A doorphone system (101) comprising:
a doorphone entrance station (1);
a doorphone master station (2) which is connected to the doorphone entrance station (1) via a wire;
a relay station (3) which is wirelessly connected to the doorphone master station (2);
a cordless extension master station (6) which is wirelessly connected to the relay station (3),
wherein a wireless communication link is established between the doorphone master station (2) and the cordless extension master station (6) via the relay station (3).

2. The doorphone system (101) according to claim 1,
wherein the doorphone master station (2) includes a first wireless unit which wirelessly communicates with the relay station (3),
wherein the cordless extension master station (6) includes a third wireless unit which wirelessly communicates with the relay station (3), and
wherein the relay station (3) includes a circuit control unit (33) which functions as a master station against each of the first wireless unit and the third wireless unit, and includes a second wireless unit which wirelessly communicates with each of the first wireless unit and the third wireless unit.

3. The doorphone system (101) according to claim 1, wherein the relay station (3) includes a charging unit which charges the cordless extension master station (6).

4. The doorphone system (101) according to claim 1, wherein the relay station (3) includes a telephone line interface circuit (65) which operates as a cordless phone.

5. The doorphone system (101) according to claim 1, wherein the relay station (3) is formed so that an ON/OFF state of a wireless communication function is switchable.
